# EUROPÄISCHE PATENTSCHRIFT

(11) **EP 1 460 115 B1**
(45) Veröffentlichungstag und Bekanntmachung des Hinweises auf die Patenterteilung: **29.01.2014**
(21) Anmeldenummer: 04005386.0
(22) Anmeldetag: 06.03.2004
(51) Int. Cl.: C09J 5/00, C09J 201/00, C09J 133/06, B29C 65/00, E04B 1/00, C09J 7/02

(54) **Haftklebende Materialien und Dichtungsmaterialien mit drei-dimensionaler Struktur, sowie Verfahren zu deren Herstellung**
Three dimensional adhesive materials and sealing materials, as well as the process for producing them
Matières adhésives et joints avec structure tridimensionelle et procédé de production

(30) Priorität: 15.03.2003 DE 10311433
(43) Veröffentlichungstag der Anmeldung: 22.09.2004
(73) Patentinhaber: Lohmann GmbH & Co. KG, 56567 Neuwied (DE)
(72) Erfinder: Ander, Hansjörg, 56170 Bendorf (DE); Röser, Heinz Josef, 56294 Gappenach (DE)
(74) Vertreter: Flaccus, Rolf-Dieter

(56) Entgegenhaltungen:
- GB-A- 1 284 296
- US-A- 5 344 681
- US-A- 6 074 745

## Beschreibung

Die Erfindung betrifft Verfahren zur Herstellung von haftklebenden Materialien oder Dichtungsmaterialien mit definierter Querschnitts-Geometrie und dreidimensionaler Struktur, insbesondere in Form von Rollen- oder Endlos-Materialien.

Haftklebstoffe werden nach den derzeit bekannten Verfahren ausschließlich als planare (oder flächige) Systeme in Form von ein- oder doppelseitigen Klebebändern hergestellt, wobei die Dicke solcher Systeme im allgemeinen zwischen 15 µm und 4000 µm liegt. Die Herstellung erfolgt durch eine Beschichtung von Trägermaterialien oder Prozeßfolien mit einem Haftklebstoff, wobei die Breite etwa 500 bis 2000 mm beträgt. Die Beschichtung des Haftklebstoffs erfolgt aus Lösung (wässrige oder organische Lösemittel) oder mittels eines lösemittelfreien Prozesses. Die so erhaltenen Großrollen ("Jumboware") werden anschließend zu entsprechenden Schmalrollen oder Spulen verarbeitet.

Die Einsatzmöglichkeiten dieser bekannten, flächigen Haftklebstoffsysteme sind allerdings begrenzt. Für viele Anwendungen ist es wünschenswert oder erforderlich, daß die zum Verkleben von Fügeteilen verwendeten Haftklebstoffsysteme oder die zum Abdichten verwendeten Dichtungsmaterialien eine andere Geometrie aufweisen als die bekannten flächigen Materialien. Diese Materialien weisen eine - relativ zur Flächenausdehnung - nur geringe Dicke auf und sind deshalb annähernd als zweidimensionale Gebilde anzusehen.

Es war deshalb ein Ziel der vorliegenden Erfindung Herstellungsverfahren anzugeben, durch welche derartige verbesserte Haftklebstoff- und Dichtungsmaterialien auf einfache und kostengünstige Weise erhalten werden können.

Ferner bestand die Aufgabe darin, durch solche Verfahren die Herstellung von Haftklebstoff- und Dichtungsmaterialien zu ermöglichen, welche nahezu jede beliebige gewünschte geometrische Querschnitts-Form aufweisen können.

Die Lösung dieser und anderer Probleme wird überraschenderweise durch Verfahren gemäß Anspruch 1 gelöst, sowie durch die in den abhängigen Ansprüchen beschriebenen Ausführungsformen.

Die erfindungsgemäßen Verfahren ermöglichen die Herstellung von haftklebenden Materialien oder Dichtungsmaterialien mit definierter Querschnitts-Geometrie und dreidimensionaler Struktur, insbesondere in Form von Rollen- oder EndlosMaterialien. Die Verfahren zeichnen sich unter anderem dadurch aus, daß diese Materialien trotz ihrer komplexen Struktur auf einfache Art und Weise als Rollen- oder Spulenware hergestellt werden können.

Unter "Querschnitts-Geometrie und dreidimensionaler Struktur" wird insbesondere verstanden, daß die Geometrie dieser Materialien, bezogen auf den Querschnitt, von der flächigen zweidimensionalen Geometrie bekannter Klebebänder abweicht und daß die Struktur, insbesondere die Oberfläche, der erfindungsgemäßen Materialien nicht planar oder flächig ist, sondern eine definierte dreidimensionale Kontur aufweist. Beispielsweise können die erfindungsgemäßen Materialien als Endlos-Systeme ausgebildet sein, die einen kreisrunden oder drei-, vier- oder mehreckigen Querschnitt aufweisen, und deren Oberfläche entsprechend gebogen, gekrümmt oder mit Kanten versehen ist. Aber auch kompliziertere Profile lassen sich mit den erfindungsgemäßen Verfahren erhalten, z. B. Materialien mit V-förmigem Querschnitt.

Ein erfindungsgemäßes Herstellungsverfahren umfaßt zumindest die folgenden Schritte (und kann wahlweise weitere Schritte beinhalten):
(a) Herstellung einer polymerisationsfähigen Masse;
(b) Auftragen dieser Masse auf eine bahnförmige, dehäsive Unterlage, welche in Längsrichtung eine oder mehrere Vertiefungen mit einer vorgegebenen Querschnitts-Kontur aufweist, wobei als bahnförmige dehäsive Unterlage ein Endlos-Band verwendet wird;
(c) Einbringen der Masse in eine Härtungseinheit zum Aushärten der polymerisationsfähigen Masse.

Dabei werden die Querschnitts-Geometrie und die dreidimensionale Struktur der so erhaltenen haftklebenden Materialien oder Dichtungsmaterialien im wesentlichen durch die genannte Querschnitts-Kontur der verwendeten Unterlage bzw. des verwendeten Hohlkörpers bestimmt.

Als polymerisationsfähige Masse (Schritt (a)) wird bevorzugt eine durch Strahlung polymerisierbare Masse verwendet. Besonders bevorzugt wird als polymerisierbare Masse eine Mischung aus mindestens einer Verbindung aus der Gruppe der Acrylate und Methacrylate mit einem oder mehreren strahlungssensitiven Initiator(en) verwendet, oder eine Masse, welche eine solche Mischung enthält. Nach einer bevorzugten Ausführungsform wird die Masse unter Verwendung einer Kom-bination von mindestens zwei Verbindungen aus der Gruppe der Acrylate und Methacrylate hergestellt.

Die polymerisationsfähige Masse kann auch Acrylsäure- oder/ und Methacrylsäuremonomere enthalten, vorzugsweise in Kombination mit (Meth)acrylat(en).

Ferner kann als polymerisationsfähige Masse auch ein Polymersirup aus Acrylaten und/oder Methacrylaten verwendet werden, der einen oder mehrere strahlungssensitiven Initiatoren enthält. Der/die strahlungssensitiven Initiatoren wird/werden während der Herstellung der polymerisationsfähigen Masse beigemischt.

Unter einem Polymersirup wird eine viskose polymerisationsfähige Masse verstanden, insbesondere eine polymerisationsfähige Masse mit einer Viskosität von 0,5 bis 10 Pa s. Die im Einzelfall geeignete viskosität richtet sich unter anderem nach der Art des Materials und der Dicke des späteren Produkts und läßt sich durch einfache Vorversuche ermitteln. Höhere Viskositäten ermöglichen die Herstellung von Materialien mit einer größeren Schichtdicke, da die Masse weniger stark verläuft und eine höhere Eigenstabilität besitzt.

Im allgemeinen besteht eine polymerisierbare Masse aus 95 bis 99,5 Gew.-% Monomer(en) oder/und Oligomer(en), sowie 0,5 bis 5 % Photoinitator(en), und erforderlichenfalls Lösemittel.
Zu der polymerisierbaren Masse können optional einer oder mehrere der folgenden Zusätze hinzugefügt werden:
Harze (5 bis 100 Gew.-%); anorganische Füllstoffe (0,1 bis 10 Gew.-%); Flammschutzmittel (0,1 bis 10 Gew.-%); Farbstoffe (0,1 bis 2 Gew.-%); Vernetzer (0,05 bis 5 Gew.-%). Die Prozentanteile beziehen sich jeweils auf die Summe aus Monomeren/Oligomeren und Photoinitiator (= 100 %).

Als Acrylate bzw. Methacrylate kommen insbesondere die folgenden Gruppen in Betracht: (Meth)alkylacrylate, aromatische (Meth)acrylate, sowie alicyclische, polycyclische und heterocyclische (Meth)acrylate.

Nachfolgend werden beispielhaft einige für die Herstellung der polymerisationsfähigen Masse besonders geeignete (Meth)acrylate aufgeführt:

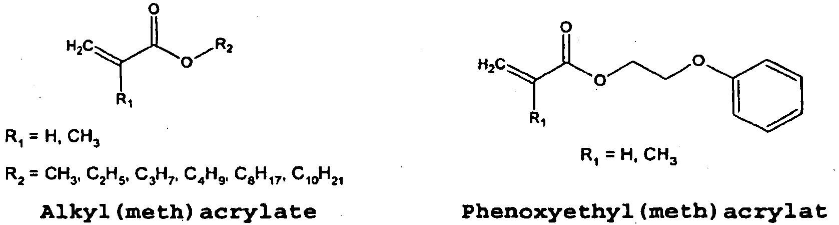

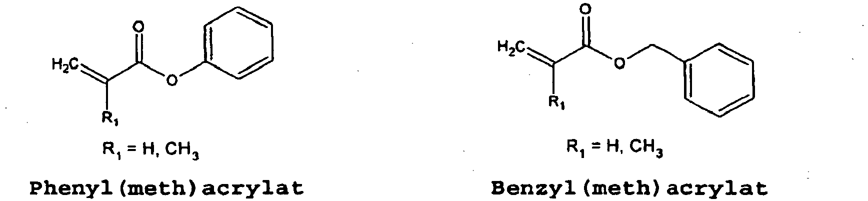

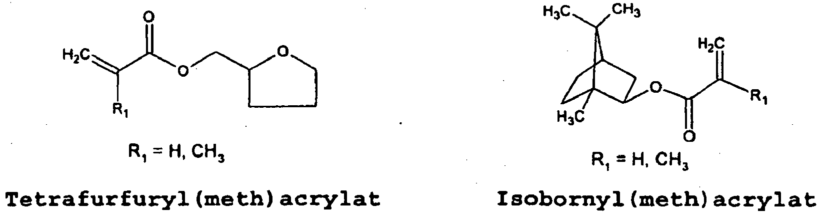

Darüber hinaus können für die Herstellung einer polymerisationsfähigen Masse auch andere Verbindungen eingesetzt werden, welche der radikalischen Polymerisation zugänglich sind. Hierfür geeignete Stoffe sind dem Fachmann grundsätzlich bekannt und können insbesondere aus den Gruppen der Di-, Tri- und höheren Acrylate und Methacrylate, der Hydroxy- und Aminoacrylate, der Vinylether und Vinylester sowie anderer ungesättigter Verbindungen ausgewählt werden. Diese Verbindungen können sowohl einzeln als auch in Kombination eingesetzt werden.

Als Beispiele für die vorstehend genannten Verbindungen sind insbesondere folgende zu nennen: Hexandiol-di(meth)-acrylat, Trimethylol-propan-tri(meth)acrylat, Pentaerythrol-tetra(meth)acrylat, Hydroxyethyl(meth)acrylat, 2-Aminoethyl(meth)acrylat sowie Vinylacetat und Stryrol. Darüber hinaus können auch heterocyclische Verbindungen, die sich mittels Strahlung und in Gegenwart von geeigneten Initiatoren zu Polymeren umsetzen lassen, zur Herstellung einer polymerisationsfähigen Masse (Schritt (a)) verwendet werden, vorzugsweise in Kombination mit einem oder mehreren der oben genannten (Meth)acrylate.

Als heterocyclische Verbindungen kommen insbesondere in Betracht: Epoxide, besonders bevorzugt Epoxide auf Basis von Bisphenol A, sowie entsprechende Epoxidharze, ferner Epoxid-Acrylate in monomerer und polymerer Form.

Ein monomeres Epoxid-Acrylat ist ein Monomer, das in eine Polyacrylatkette ein polymerisiert wird, wobei ein Polyacrylat mit Epoxidseitenketten (Copolymerisat aus Acrylat und monomerem Epoxidacrylat) entsteht, das über eine thermische oder strahlungsinduzierte Reaktion nachvernetzt werden kann.

Ein polymeres Epoxid-Acrylat ist insbesondere ein Homopolymerisat aus Glycidyl(meth)acrylat, das dem Polyacrylat beigemischt wird und das in einem zweiten Schritt die Acrylatketten vernetzt (wie oben).

Unter einem strahlungssensitiven Initiator wird eine Verbindung verstanden, die in der Lage ist, unter Einwirkung von Strahlung (insbesondere sichtbares Licht oder UV-Strahlung) Radikale zu bilden, die dann in der Lage sind, mit den im Reaktionsgemisch vorhandenen ungesättigten oder heterocyclischen Verbindungen eine Polymerisationsreaktion zu starten.

Als Beispiele für strahlungssensitive Initiatoren seien insbesondere folgende Verbindungen genannt: 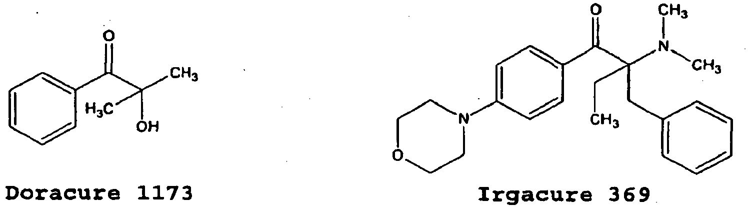 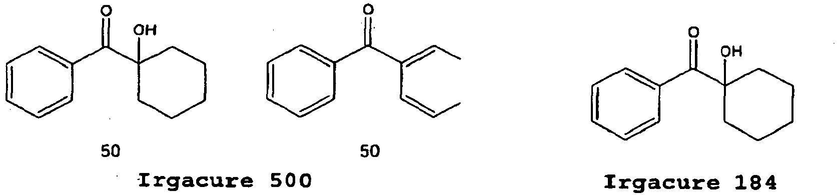 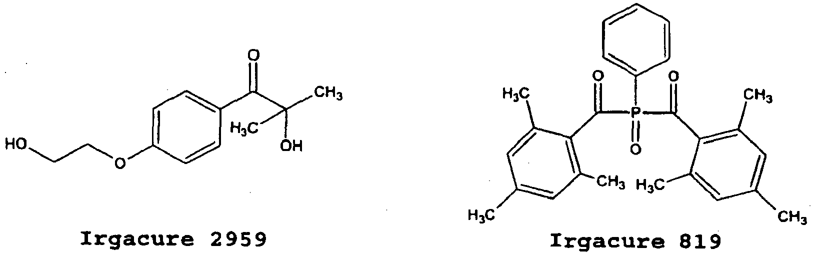 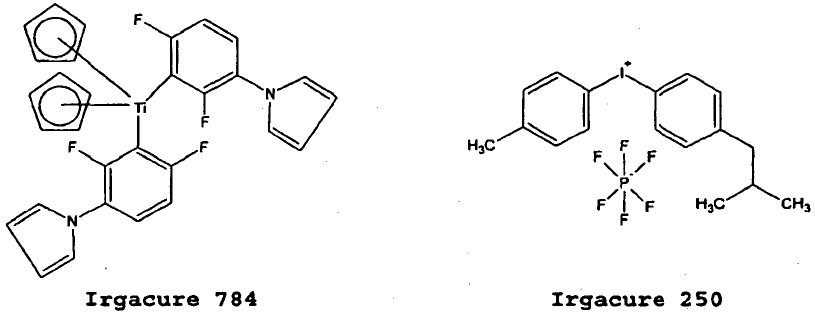 (Irgacure, Doracure: CIBA Spezialitätenchemie, Basel)

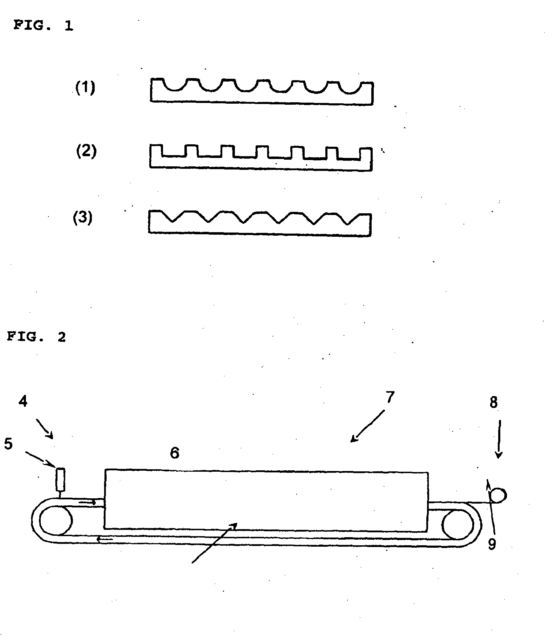

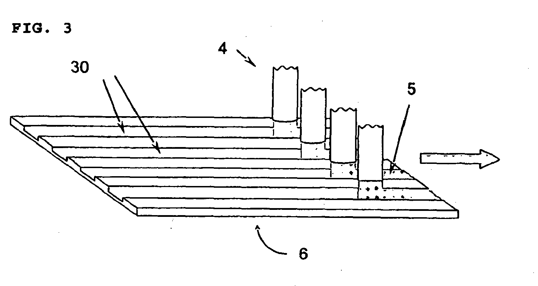

Gemäß Schritt (b) des erfindungsgemäßen Verfahrens wird die polymerisationsfähige Masse auf eine bahnförmige, dehäsive Unterlage aufgetragen, welche in Längsrichtung eine oder mehrere Vertiefungen mit einer vorgegebenen Querschnitts-Kontur aufweist. Die genannten Vertiefungen sind in Form von Längsrillen oder -furchen angeordnet, vorzugsweise im wesentlichen parallel nebeneinander und durch entsprechende Erhebungen in Längsrichtung von einander getrennt (wie z.B. in Fig. 1 und Fig. 3 gezeigt).

Die genannte bahnförmige Unterlage besteht vorzugsweise aus einem gegenüber Kleb- und Dichtstoffen dehäsiven Material, wie z. B. EPDM (Ethylen-propylen-dienmonomer), Silikonen oder Teflon, oder sie ist mit einem solchen Material beschichtet.

Besonders vorteilhaft ist die Verwendung eines Endlos-Bandes als bahnförmige Unterlage; hierbei kann es sich auch um ein Endlos-Kettenband handeln, beispielsweise aus Teflon oder mit Teflon-Beschichtung. Die bahnförmige Unterlage oder das Band weist in Längsrichtung eine oder mehrere Vertiefungen auf, deren Profil der gewünschten End-Kontur des haftklebenden Produkts oder des Dichtungsmaterials entspricht.

Falls die Unterlage mehrere Vertiefungen aufweist, sind diese im wesentlichen parallel nebeneinander angeordnet. Diese können wahlweise auch unterschiedliche Konturen aufweisen, so daß durch Verwendung einer einzigen bahnförmigen Unterlage haftklebende Produkte oder Dichtungsmaterialien mit unterschiedlichen dreidimensionalen Konturen erhalten werden können.

Im Falle der Verwendung eines Endlos-Bandes ist eine Verfahrensvariante besonders vorteilhaft, bei der die so hergestellten Materialien nachfolgend mittels einer Wickeleinheit zu Rollen oder Spulen weiterverarbeitet werden.

Das Auftragen der polymerisationsfähigen Masse auf die genannte Unterlage kann mittels bekannter Auftragsverfahren, wie z. B. Rakeltechniken oder durch Dosierventile, erfolgen. Derartige Auftragstechniken können auch in Kombination eingesetzt werden.

Gemäß Schritt (c) der erfindungsgemäßen Verfahren wird die aufgetragene bzw. eingefüllte Masse anschließend in eine Härtungseinheit eingebracht, um die polymerisationsfähige Masse zu härten. Dabei wird die Masse zu einem Haftklebstoff, einem Dichtstoff, oder einem haftklebenden Dichtstoff, umgesetzt. Unter Dichtstoffen werden insbesondere solche Materialien verstanden, die keine Diffusion von Gasen und/oder Flüssigkeiten zulassen.

Das Härten geschieht vorzugsweise mittels einer oder mehrerer Bestrahlungseinheiten. Eine Bestrahlungseinheit kann wahlweise eine oder mehrere UV-Lampen, Tageslichtlampen oder Elektronenstrahlquellen aufweisend; auch Kombinationen dieser Strahlungsquellen können mit Vorteil eingesetzt werden. Besonders bevorzugt wird UV-Strahlung verwendet. Die Strahlungsquellen werden in der Bestrahlungseinheit bevorzugt so angeordnet, daß sie das zu härtende Material mit bester Effizienz bestrahlen.

Zur Erreichung eines möglichst schnellen und vollständigen Umsatzes ist es im allgemeinen erforderlich, daß die Bestrahlungseinheit(en) mittels Inertgasen wie z. B. Stickstoff oder Kohlendioxid inertisiert werden; hierfür geeignete Vorrichtungen und Verfahren sind dem Fachmann bekannt. Insbesondere umfaßt die Erfindung die Herstellung haftklebender Materialien und Dichtungsmaterialien, die eine runde, kreisförmige, halbkreisförmige, ovale, ellipsenförmige, dreieckige, viereckige (quadratische, rechteckige), polygonale, gewinkelte (z. B. V-förmige) oder unregelmäßige Querschnitts-Kontur aufweisen. Die erfindungsgemäß hergestellten Materialien haben vorzugsweise eine Dicke von 0,5 bis 50 mm, besonders bevorzugt von 0,5 bis 10 mm. Die Breite kann je nach Verwendungszweck beliebig gewählt werden. Bei vierkantmaterialien wird bevorzugt, daß das Verhältnis Breite:Höhe im Bereich von 1:1 bis 1:3 liegt. Bei Dreikant- oder Halbrund-Materialien beträgt die Höhe vorzugsweise maximal 50 mm, besonders bevorzugt bis zu 10 mm, jeweils bei beliebiger Breite. Materialien mit derartigen Geometrien sind durch andere Verfahren nicht herstellbar.

Gemäß einer besonders bevorzugten Ausführungsform sind die haftklebenden Materialien und Dichtungsmaterialien als Endlos-Systeme, d. h. als Rollen- oder Endlosmaterial hergestellt, insbesondere in Form von Schnüren, Strängen oder Streifen. Herkömmliche Dichtungsmaterialien, insbesondere nicht klebende Dichtungsschnüre (z. B. Hanf- oder Asbestschnüre) und Dichtungsbänder (z. B. Teflonbänder), werden von der Erfindung nicht erfaßt.

Die erfindungsgemäß hergestellten haftklebenden Materialien und Dichtungsmaterialien können vorteilhaft durch Polymerisation von (Meth)Acrylaten erhalten werden, wie vorstehend beschrieben.

Die erfindungsgemäß hergestellten haftklebenden Materialien und Dichtungsmaterialien können in verschiedenen technischen Bereichen zur dauerhaften oder wiederlösbaren Verklebung von Gegenständen bzw. zur Abdichtung verwendet werden, insbesondere zum Abdichten von Fugen oder Flanschverbindungen oder Scheiben.

Die Erfindung wird nachfolgend anhand von Zeichnungen und Ausführungsbeispielen näher erläutert.

Fig. 1 zeigt anhand von drei Beispielen (1, 2, 3) mögliche Konturen (im Querschnitt) der in Längsrichtung angeordneten Vertiefungen der genannten dehäsiv ausgerüsteten bahnförmigen Unterlagen, welche in Schritt (b) des erfindungsgemäßen Verfahrens verwendet werden können. Bahn (1) ermöglicht die Herstellung von haftklebenden Materialien oder Dichtungsmaterialien als Endlos-Systeme mit halbrundem bzw. halbkreisförmigem Querschnittsprofil, Bahn (2) ermöglicht die Herstellung solcher Systeme mit rechteckigem oder quadratischem Querschnittsprofil, Bahn (3) ermöglicht die Herstellung solcher Systeme mit dreieckigem Querschnittsprofil.

Fig. 2 zeigt im Längsschnitt bzw. in Seitenansicht den schematischen Aufbau einer Anlage zur Herstellung der erfindungsgemäßen Haftkleb- und Dichtungsmaterialien. Ein dehäsives Endlos-Band (6), welches mit Konturen oder Profilen versehen ist (beispielsweise wie in Fig. 1 gezeigt), wird kontinuierlich in Pfeilrichtung bewegt. Mittels einer Dosiereinheit (4), oder mehrerer solcher nebeneinander angeordneter Dosiereinheiten, wird eine polymerisationsfähige Masse (5) in die Konturen oder Profile des dehäsiven Bandes (6) aufgetragen. Durch den Vorwärtstransport des Bandes (6) gelangt die aufgetragene polymerisationsfähige Masse (5) anschließend in den Bereich einer Bestrahlungseinheit (7), in welchem die Aushärtung der Masse stattfindet. Die gehärteten Haftkleb- oder Dichtungsmaterialien (9) werden nachfolgend in einer Wickeleinheit (8) zu Rollen oder Spulen aufgewickelt.

Fig. 3 zeigt in perspektivischer, schematischer Darstellung den Vorgang des Masse-Auftrags (im Bereich der Dosiereinheit (4) in Fig. 2) im Detail. Durch eine Vielzahl von nebeneinander angeordneten Dosiereinheiten (4) wird polymerisationsfähige Masse (5) in die Konturen bzw. Profile (30) der bandförmigen, dehäsiven Unterlage (6) aufgetragen. Die aufgetragene Masse gelangt durch den Vorwärtstransport des Bandes (Pfeilrichtung, nach rechts) zur Bestrahlungseinheit (nicht abgebildet).

Falls mehrere Dosiereinheiten nebeneinander angeordnet sind, können diese wahlweise auch zum Auftragen unterschiedlicher polymerisierbarer Massen dienen, beispielsweise mit unterschiedlicher Monomerzusammensetzung.

### Beispiele

### a) Herstellung eines Polymer-Sirups

In einem Glasbehälter legt man eine Mischung aus 155 Gewichtsteilen 2-Ethylhexylacrylat, 85 Gewichtsteilen Acrylsäure, 55 Gewichtsteilen Butylacrylat und 1,4 Gewichtsteilen Irgacure 819 vor. Anschließend spült man 5 min mit Schutzgas und bestrahlt die Reaktionsmischung, bis sich eine Viskosität von 3 Pas einstellt.

### b) Herstellung eines dreimensionalen Klebebandes

Der gemäß a) hergestellte Polymersirup wird unter Verwendung einer Anlage gemäß Fig. 2 zu einem strukturierten Haftklebeband verarbeitet. Als Prozeßband wird ein Band gemäß Fig. 1(3) verwendet. Die Bandgeschwindigkeiten liegen in folgenden Bereichen:

| Band-Dicke [µm] | Band-Geschwindigkeit [m/min] |
|---|---|
| 500 | 2 - 5 |
| 1000 | 1 - 3 |
| 2000 | 0,5 - 2 |
| 4000 | 0,3 - 1 |

Als UV-Quellen dienen Lampen mit einer Leistung von 1 bis 150 W/cm. Bei den Ausführungsbeispielen lag die Leistung typischerweise im Bereich von 80 bis 150 W/cm.

Die Verarbeitungstemperatur ist in der Regel Raumtemperatur (ca. 15 bis 30 °C), wobei sich das Produkt jedoch aufgrund der freigesetzten Reaktionswärme von selbst erwärmen kann.

## Patentansprüche

1. Verfahren zur Herstellung von haftklebenden Materialien oder Dichtungsmaterialien mit definierter Querschnitts-Geometrie und dreidimensionaler Struktur, wobei das Verfahren die folgenden Schritte umfaßt:
(a) Herstellung einer polymerisationsfähigen Masse (5);
(b) Auftragen dieser Masse auf eine bahnförmige, dehäsive Unterlage (1,2,3,6), welche in Längsrichtung eine oder mehrere Vertiefungen (30) mit einer vorgegebenen Querschnitts-Kontur aufweist, wobei als bahnförmige, dehäsive Unterlage ein Endlos-Band (6) verwendet wird,
(c) Einbringen der Masse in eine Härtungseinheit (7) zum Aushärten der polymerisationsfähigen Masse (5).

2. Verfahren nach Anspruch 1, **dadurch gekennzeichnet, daß** die genannte Masse durch Strahlung polymerisierbar ist.

3. Verfahren nach Anspruch 1 oder 2, **dadurch gekennzeichnet, daß** die polymerisierbare Masse mindestens eine Verbindung aus der Gruppe der Acrylate und Methacrylate enthält, vorzugsweise eine Mischung von mindestens zwei Verbindungen aus der Gruppe, welche Acrylate und Methacrylate umfaßt.

4. Verfahren nach einem der vorangehenden Ansprüche, **dadurch gekennzeichnet, daß** die in Schritt (a) hergestellte polymerisierbare Masse ein Polymersirup ist.

5. Verfahren nach einem der vorangehenden Ansprüche, **dadurch gekennzeichnet, daß** bei der Herstellung der polymerisierbaren Masse ein oder mehrere Fotoinitiatoren zugesetzt wird/werden, und daß als Härtungseinheit eine Bestrahlungseinheit, oder mehrere solcher Einheiten, verwendet wird.

6. Verfahren nach Anspruch 5, **dadurch gekennzeichnet, daß** eine Bestrahlungseinheit verwendet wird, welche eine oder mehrere UV-Lampen aufweist.

7. Verfahren nach Anspruch 5, **dadurch gekennzeichnet, daß** eine Bestrahlungseinheit verwendet wird, welche eine oder mehrere Tageslichtlampen aufweist.

8. Verfahren nach Anspruch 5, **dadurch gekennzeichnet, daß** eine Bestrahlungseinheit verwendet wird, welche eine oder mehrere Elektronenstrahlquellen aufweist.

9. Verfahren nach Anspruch 5, **dadurch gekennzeichnet, daß** eine Bestrahlungseinheit verwendet wird, welche eine Kombination aus mindestens zwei unterschiedlichen Strahlungsquellen aufweist, ausgewählt aus der Gruppe, welche UV-Lampen, Tageslichtlampen und Elektronenstrahlquellen umfaßt.

10. Verfahren nach Anspruch 1, **dadurch gekennzeichnet, daß** das Band (6) in Längsrichtung eine oder mehrere Vertiefungen oder/und Erhebungen aufweist, deren Profil der gewünschten End-Kontur des haftklebenden Produkts oder des Dichtungsmaterials entspricht.

11. Verfahren nach Anspruch 1 oder 10, **dadurch gekennzeichnet, daß** die dabei hergestellten Materialien nachfolgend mittels einer Wickeleinheit (8) zu Rollen oder Spulen verarbeitet werden.

12. Verfahren nach einem Ansprüche 1 bis 9, **dadurch gekennzeichnet, daß** als konturgebende(r) Hohlkörper (11) ein schlauchförmiges, befüllbares Material verwendet wird, welches dehäsiv ist oder auf seiner Innenseite dehäsiv ausgerüstet ist.

## Claims

1. Process for the production of pressure sensitive adhesive materials or sealing materials having a defined crosssectional geometry and three-dimensional structure, the said process comprising the following steps:
(a) preparing a polymerizable mass (5);
(b) applying this mass to an abhesive support (1, 2, 3, 6) in web form which, in its longitudinal direction, has one or more depressions (30) having a predetermined crosssectional contour, a continuous band or belt (6) being used as the said abhesive support in web form;
(c) feeding the mass to a curing unit (7) for curing the polymerizable mass (5).

2. Process according to claim 1, **characterized in that** the said mass is polymerizable by radiation.

3. Process according to claim 1 or 2, **characterized in that** the polymerizable mass contains at least one compound from the group of the acrylates and methacrylates, preferably a mixture of at least two compounds from the group comprising acrylates and methacrylates.

4. Process according to any one of the preceding claims, **characterized in that** the polymerizable mass prepared in step (a) is a polymer syrup.

5. Process according to any one of the preceding claims, **characterized in that** during the preparation of the polymerizable mass, one or more photoinitiators is/are added, and **in that** an irradiation unit, or a plurality of such units, is used as the curing unit.

6. Process according to claim 5, **characterized in that** an irradiation unit is used which has one or more UV lamps.

7. Process according to claim 5, **characterized in that** an irradiation unit is used which has one or more daylight lamps.

8. Process according to claim 5, **characterized in that** an irradiation unit is used which has one or more electron beam sources.

9. Process according to claim 5, **characterized in that** an irradiation unit is used which has a combination of at least two different radiation sources, selected from the group comprising UV lamps, daylight lamps and electron beam sources.

10. Process according to claim 1, **characterized in that** the band or belt (6) has one or more depressions or/and protrusions, the profile of which corresponds to the desired final contour of the pressure sensitive adhesive product or of the sealing material.

11. Process according to claim 1 or 10, **characterized in that** the materials thus produced are subsequently processed into rolls or coils by means of a wind-up unit (8).

12. Process according to any one of claims 1 to 9, **characterized in that** as the contour-imparting hollow body/bodies (11), a tubular, fillable material is used which is abhesive or is rendered abhesive on its interior side.

## Revendications

1. Procédé pour la production de matières autocollantes ou de matières d'étanchéisation possédant une géométrie définie en section transversale et une structure en trois dimensions, le procédé comprenant les étapes suivantes :
(a) préparation d'une matière apte à la polymérisation (5) ;
(b) application de cette matière sur un substrat antiadhésif en forme de bande (1, 2, 3, 6) qui présente, en direction longitudinale un ou plusieurs renfoncements (30) possédant un contour prédéfini en section transversale, un ruban sans fin (6) étant utilisé à titre de substrat antiadhésif en forme de bande ;
(c) introduction de la matière dans une unité de durcissement (7) pour durcir la matière apte à la polymérisation (5).

2. Procédé selon la revendication 1, **caractérisé en ce que** la matière mentionnée peut être polymérisée par exposition à un rayonnement.

3. Procédé selon la revendication 1 ou 2, **caractérisé en ce que** la matière polymérisable contient au moins un composé du groupe des acrylates et des méthacrylates, de préférence un mélange d'au moins deux composés du groupe qui comprend des acrylates et des méthacrylates.

4. Procédé selon l'une quelconque des revendications précédentes, **caractérisé en ce que** la matière polymérisable que l'on prépare à l'étape (a) est un sirop polymère.

5. Procédé selon l'une quelconque des revendications précédentes, **caractérisé en ce que**, lors de la préparation de la matière polymérisable, on ajoute un ou plusieurs photoinitiateurs, et **en ce qu'**on utilise à titre d'unité de durcissement une unité d'exposition à un rayonnement ou plusieurs unités de ce type.

6. Procédé selon la revendication 5, **caractérisé en ce qu'**on utilise une unité d'exposition à un rayonnement qui présente une ou plusieurs lampes UV.

7. Procédé selon la revendication 5, **caractérisé en ce qu'**on utilise une unité d'exposition à un rayonnement qui présente une ou plusieurs lampes à lumière du jour.

8. Procédé selon la revendication 5, **caractérisé en ce qu'**on utilise une unité d'exposition à un rayonnement qui présente une ou plusieurs sources de faisceaux électroniques.

9. Procédé selon la revendication 5, **caractérisé en ce qu'**on utilise une unité d'exposition à un rayonnement qui présente une combinaison d'au moins deux sources de rayonnements différentes, choisis parmi le groupe qui comprend des lampes UV, des lampes à lumière du jour et des sources de faisceaux électroniques.

10. Procédé selon la revendication 1, **caractérisé en ce que** le ruban (6) présente en direction longitudinale un ou plusieurs renfoncements et/ou un ou plusieurs éminences dont le profil correspond au contour final désiré du produit auto-adhésif ou de la matière d'étanchéisation.

11. Procédé selon la revendication 1 ou 10, **caractérisé en ce que** les matières préparées en l'occurrence sont soumises à un traitement ultérieur au moyen d'une unité d'enroulement (8) pour obtenir des rouleaux ou des bobines.

12. Procédé selon l'une quelconque des revendications 1 à 9, **caractérisé en ce que**, à titre de corps creux (11) conférant un contour, on utilise une matière en forme de tuyau flexible qui peut être remplie, qui est antiadhésive ou qui a été rendue antiadhésive sur son côté interne.
